# EUROPÄISCHE PATENTSCHRIFT

(11) **EP 3 689 137 B1**
(45) Veröffentlichungstag und Bekanntmachung des Hinweises auf die Patenterteilung: **22.12.2021**
(21) Anmeldenummer: 20154689.2
(22) Anmeldetag: 30.01.2020
(51) Int. Cl.: A01K 5/015, A01K 39/01

(54) **VERFAHREN ZUR DOSIERUNG EINES FUTTERZUSATZES FÜR GEFLÜGEL**
METHOD FOR DOSING A FEED ADDITIVE FOR POULTRY
PROCÉDÉ DE DOSAGE D'UN COMPLÉMENT POUR VOLAILLES

(30) Priorität: 31.01.2019 EP 19154695
(43) Veröffentlichungstag der Anmeldung: 05.08.2020
(73) Patentinhaber: Krieger AG, 6017 Ruswil (CH)
(72) Erfinder: Müller, Raphael, 6026 Rain (CH)
(74) Vertreter: Koelliker, Robert

(56) Entgegenhaltungen:
- WO-A1-2011/091999
- CN-U- 202 190 632
- FR-A1- 2 622 394
- US-A- 4 380 214

## Beschreibung

Die vorliegende Erfindung bezieht sich auf ein Verfahren zur Dosierung eines Calcium-basierten Futterzusatzes für Geflügel wie Legehennen mittels einer Dosiervorrichtung, eine Dosiervorrichtung zur Dosierung eines körnigen Calcium-basierten Futterzusatzes, sowie die Verwendung des Verfahrens und der Dosiervorrichtung.

Für die moderne Eierproduktion werden tausende Legehennen in einem Stall, beispielsweise in einem Freilaufstall und gegebenenfalls mit Auslauf, gehalten. Dabei werden die Legehennen in der Regel täglich 3- bis 8-mal gefüttert. Hierzu wird typischerweise das Futter von einem grossen Aussensilo durch ein Rohr zu einem kleineren Zwischenbehälter gefördert, von wo das Futter während der Fütterung der Legehennen, gegebenenfalls durch ein dünneres Rohr, fein dosiert auf eine Futterkette gebracht wird. Diese Futterkette wird innerhalb des Stalls geführt, sodass alle Legehennen im Stall einen möglichst optimalen Zugang zum Futter haben. Je nach Grösse des Stalls und Anzahl der Legehennen kann ein Stall auch mehrere Futterketten aufweisen.

Das von den Legehennen während eines Tages aufgenommene Futter muss, je nach Alter der Tiere, einen gewissen Kalkanteil aufweisen. Ansonsten wird die Eierschale zu dünn und wird zerstört. Bei anhaltendem Kalkmangel stoppen die Hennen auch die Eierproduktion. Zudem führt Kalkmangel beim Huhn vermehrt zu Knochenbrüchen. Weist die Futterration über den ganzen Tag einen zu hohen Kalkanteil auf, ist dies jedoch nachteilig für die Nahrungsverwertung und die Eier werden zu klein. Als optimal hat es sich erwiesen, wenn das Huhn abends mit der letzten Fütterung Kalk zu sich nimmt.

Als Kalk wird oft körniger, trockener Muschelkalk verwendet, welchen die Legehennen gut aufnehmen können. Allerdings ist körniger Kalk schwer förder- und dosierbar, denn er weist u.a. eine schlechte Rieselfähigkeit auf. Aufgrund der kantigen bis scharfkantigen Morphologie der Körner verblocken diese sehr oft die Apparaturen. Deshalb wird der Kalk in aller Regel noch von Hand auf dem Boden verteilt. Nachteilig daran ist nicht nur der benötigte Personalaufwand, sondern auch, dass nur ein Teil des auf dem Boden verteilten Kalks gefressen wird.

Alternativ wird der Kalk nach dem Aussensilo, in welchem das Futter gelagert wird, jedoch vor dem Zwischenbehälter, mittels Spiralförderung dem Futter beigemischt. Denn aufgrund der schwierigen Dosierbarkeit des Kalks kann dieser nur in grösseren Mengen zuverlässig dosiert werden. Die erhaltene Futter/Kalkmischung wird anschliessend in einem Zwischenbehälter für die spätere Feindosierung zwischengelagert. An dieser Methode ist nachteilig, dass jeweils der erste Teil des Abendfutters mit der letzten Futterzusammensetzung identisch ist und somit keinen Kalk enthält. Zudem enthält der erste Teil des nachfolgenden Morgenfutters noch Kalkreste vom Vorabend, was wiederum unerwünscht ist.

Somit ist es die Aufgabe der vorliegenden Erfindung die Kalkzugabe für die Fütterung von Legehennen so zu optimieren, dass sie automatisiert und selektiv nur während einer Fütterung und in gewünschter Menge erfolgen kann, ohne dass das Futter bei der nachfolgenden Fütterung noch Kalkreste enthält.

Diese Aufgabe konnte überraschenderweise gelöst werden mit einem Verfahren zur Dosierung eines körnigen Calcium-basierten Futterzusatzes (1) in Ställen (2) für Geflügel, gemäss Anspruch 1.

Das erfindungsgemässe Verfahren zum Dosieren eines Futterzusatzes (1) in Ställen (2) für Geflügel wie Legehennen weist überraschenderweise viele Vorteile auf, die in dieser Form nicht erwartet werden konnten. So kann die Zugabe auch von schwer förder- und/oder dosierbarem körnigem Calcium-basierten Futterzusatz (1) - wie trockener Muschelkalk - zum Futter (5) automatisiert werden und es ist keine manuelle Zugabe mehr erforderlich. Dadurch nehmen die Hühner nicht nur alles Futter (5) auf, sondern auch den ganzen Futterzusatz (1), was zu einer besseren Eierschalenqualität führt. Dies reduziert auch die Gefahr, dass schädliche Keime wie Bakterien oder Viren vom Menschen auf die Legehennen im Freilaufstall übertragen werden. Durch das erfindungsgemässe Verfahren kann dem Geflügel auf der Futterkette (4) abwechselnd gezielt Futter (5) mit und ohne Calcium-basiertem Futterzusatz (1) verabreicht werden. Dabei erfolgt die Zugabe des gewünschten Futterzusatzes (1) zum Futter (5) ausschliesslich während der ausgewählten Fütterung. Wird der Futterzusatz (1) beispielsweise abends mit der letzten Fütterung dem Futter (5) zugemischt, enthält dann das Morgenfutter keine Restfutteranteile des Abendfutters. Dies wiederum enthält keine Restfutteranteile der vorhergehenden Fütterung ohne Kalk, jedoch gegebenenfalls mit anderen Futterzusätzen. Auch können die Mengen an Futterzusatz (1) unabhängig vom Futter (5) dosiert werden, wodurch das Verhältnis Futterzusatz (1) zum Futter (5) individuell angepasst werden kann. Dabei kann die zu dosierende Menge an Futterzusatz (1) beispielsweise einfach mittels Einstellung der zweiten, unteren Öffnung (312) mit dem Auslassschieber (33) und/oder anhand der Geschwindigkeit des Förderelements (34) oder des Rührelements (32) eingestellt werden. Zudem verhindert die Anwesenheit des Rührelements (32) im Bereich der zweiten Öffnung (312) das Zusammenbacken des Futterzusatzes (1), welcher aufgrund der Morphologie und der schlechten Rieselfähigkeit bei Abwesenheit eines Rührelements die zweite Öffnung (312) verschliessen kann.

Die Futterkalk-Dosiervorrichtung (3*) erlaubt überraschenderweise die kontinuierliche Dosierung von schwierig dosierbarem körnigen Calcium-basierten Futterzusatz (1) mit einem Durchmesser bis 6 mm, gemessen nach DIN 4022, auf Futterketten (4) für Geflügel, insbesondere Legehennen. Dabei erfolgt die Dosierung des Futterzusatzes linear, d.h. gleichmässig. Dies ist erfindungswesentlich und führt auf der Futterkette (4) zu einem gleichbleibenden Verhältnis von Futter (5) und Futterzusatz (1). Somit wird verhindert, dass der schwer dosierbare körnige Futterzusatz (1) stossweise auf die Futterkette (4) gefördert wird, was zu stark unregelmässigen Verhältnissen von Futter (5) und Futterzusatz (1) führen würde. Dies kann mit dem Stand der Technik nicht erreicht werden.

Die WO-A-2011/091999 beschreibt eine Futteranlage für die Bereitstellung von fermentiertem Feuchtfutter für Geflügeltiere in einer Freiland- oder Stallhaltung mit einer für das Geflügel zugänglichen Fördereinrichtung mit einem schnell laufenden Förderband. Die Futteranlage weist zudem eine Reinigungsvorrichtung zum Entfernen von Futterresten auf. Die Dosierung eines schwierig dosierbaren, körnigen Futterzusatzes ist nicht offenbart, wobei die Futteranlage dazu auch nicht geeignet ist.

Die CN-U-202190632 offenbart eine Futterdosiervorrichtung auf Rädern zur Fütterung von kleinen Hühnern während deren Aufzucht zu Hause in Käfigen. Die Dosiervorrichtung umfasst ein Zellenrad, welches mit der Radachse verbunden ist. Wird nun die Futterdosierung entlang des Hühnerkäfigs geführt, wird das Zellenrad angetrieben, wodurch Futter über eine Rohrleitung in das Hühnerkäfig gefördert wird. Die Futterdosiervorrichtung eignet sich für die Dosierung von Geflügelfutter, nicht aber zur gleichmässigen Dosierung von körnigem, anorganischen Futterzusatz zu Geflügelfutter.

Die US-4,380,214 beschreibt eine Futterschleuse für Geflügelförderer mit einer Futterschieberanordnung, die mindestens einen Futtertransport mit einem sich bewegenden Futterträger wie einer endlosen Schleppkette, einem Förderband oder einer ähnlichen Struktur aufweist. Die Zuführeinheit umfasst ein Gehäuse, durch welches sich die Förderkette bewegt. Dabei wird das Futter im Vorratsbehälter mittels Rütteln nach unten bewegt. Indem der sich bewegende Futterträger durch die Futterschleuse führt, kann sowohl das Futter wie auch der Futterträger, beispielsweise aufgrund von Scherkräften oder Verunreinigungen, negativ beeinflusst werden. Zudem ist die Dosierung eines Futterzusatzes, insbesondere eines schwierig dosierbaren, körnigen Futterzusatzes, nicht offenbart, wobei die Futterschleuse dazu auch nicht geeignet ist.

Die FR-A-2 622 394 offenbart für die Fütterung von Legehennen, die in einer Käfigbatterie gruppiert sind, zwei getrennte Tröge, welche beide für die in den Käfigen gehaltenen Vögel mit den Schnäbeln zugänglich sind. Ein Trog enthält normales Futter, das eine geringe Menge Kalzium enthält oder frei von Kalzium ist, und der andere Trog enthält einen Kalziumzusatz. Freilaufställe und eine Dosiervorrichtung zur Dosierung eines Calcium-basierten Futterzusatzes sind nicht erwähnt.

### Das Verfahren

Das erfindungsgemässe Verfahren ist geeignet zur Dosierung eines körnigen Calcium-basierten Futterzusatzes (1), insbesondere von schwer förderbaren Futterzusätzen für Geflügel, insbesondere Legehennen, wobei Futter (5) von einem Silo, gegebenenfalls über einen Zwischenbehälter (6), über eine Futter-Förderleitung (7) auf eine, typischerweise in einem Stall (2) angeordnete, Futterkette (4) gefördert wird. Die Dosierung des Futters (5) und des Futterzusatzes (1) erfolgt bevorzugt in Ställen (2), insbesondere in Freilaufställe, in welchen das Geflügel, beispielsweise die Legehennen, frei herumlaufen können. Die Dosierung des Futterzusatzes (1) wie auch des Futters (5) erfolgt typischerweise auf eine Futterkette (4), welche zumindest während der Fütterung in einer Endlosschlaufe im Stall (2) geführt wird.

Das Futter (5) für Geflügel ist kommerziell erhältliches und eingesetztes Geflügelfutter. Es basiert typischerweise auf gemahlenen Getreidekörnern und ist in der Regel ein Gemisch aus Mehl und Getreidekörnern. Somit ist das Futter (5) im Wesentlichen ein organisches Futter.

Das Futter (5) wird in einem Silo, welches typischerweise ausserhalb des Stalls (2) angeordnet ist, gelagert. Das Silo weist beispielsweise ein Fassungsvolumen von 1 m³ bis 40 m³ oder mehr auf. Vom Silo wird das Futter (5) ― in der Regel über einen Zwischenbehälter (6) zur Futterkette (4) gefördert. Der Zwischenbehälter (6), welcher oft im Stall (2) angeordnet ist, umfasst ein Fassungsvolumen für das Futter (5) von beispielsweise 5 bis 100 dm³.

Die Futterkette (4) wird in einer Endlosschlaufe ― typischerweise im Stall (2) ― so geführt, dass das Geflügel das darauf befindliche Futter (5) und den Futterzusatz (1) bequem picken kann. Typischerweise weist die Förderkette (4) eine Fördergeschwindigkeit von etwa 5 bis 40 m/min auf. Das Futter (5) und der Futterzusatz (1) werden typischerweise von oben - und möglichst gleichmässig verteilt - auf die Futterkette (4) aufgebracht.

Unter körnigem Calcium-basierten Futterzusatz (1), d.h. Futterzusatz (1), insbesondere Futterkalk, wird erfindungsgemäss ein Futter verstanden, welches dem Geflügel zusätzlich zum regulären Futter (5) typischerweise nur während einem Teil der täglichen Fütterungen zur Verfügung gestellt wird. Der Futterzusatz (1) ist im Wesentlichen, d.h. zu mindestens 90 Gew.-%, insbesondere zu mindestens 95 Gew.-%, ein anorganisches Futter und wird typischerweise in einer Menge von bis zu 10 Gew.-%, insbesondere bis zu 3 Gew.-%, bezogen auf den Trockenanteil des während einem Tag, d.h. während 24 Stunden, verabreichten Futters inklusive Futterzusatz (1), verfüttert.

Bevorzugte Calcium-basierte Futterzusätze (1) wie Kalk sind oft aufgrund der kantigen bis scharfkantigen Morphologie der einzelnen Körner schwer förder- und dosierbar. Darunter versteht der Fachmann, dass der Futterzusatz (1) einen Schüttwinkel von mindestens 40°, bevorzugt mindestens 43°, gemessen nach DIN/ISO 4324, aufweist.

Das Verfahren erlaubt eine Dosierung des Calcium-basierten Futterzusatzes (1) unabhängig von der Dosierung des normalen Futters (5). Dadurch können der Futterzusatz (1) und das Futter (5) unabhängig voneinander dosiert werden, wobei die Dosierung des Futterzusatzes (1) bevorzugt zur gleichen Zeit wie das Futter (5) erfolgt. Dadurch vermischt sich der Futterzusatz (1) mit dem Futter (5) spätestens auf der Futterkette (4), wodurch das Geflügel das Futter (5) und den Futterzusatz (1) in der Regel im vorgesehenen, gemischten Verhältnis frisst. Dies führt beim Geflügel zu einer regelmässigen Aufnahme des Futterzusatzes (1) in der gewünschten Menge. Das Verfahren ermöglicht zudem, dass dem Geflügel auf der Futterkette (4) abwechselnd Futter (5) mit und ohne Calcium-basiertem Futterzusatz (1) verabreicht kann Im erfindungsgemässen Verfahren wird die Dosiervorrichtung (3) eingesetzt, wobei als Dosiervorrichtung (3) insbesondere auch die Futterkalk-Dosiervorrichtung (3*), d.h. Dosiervorrichtung (3*), verwendet werden kann. Gemeinsam werden sie als Dosiervorrichtung (3, 3*) bezeichnet.

In einer Ausführungsform des Verfahrens wird der Calcium-basierte Futterzusatz (1) mittels einer Dosiervorrichtung (3, 3*) unabhängig von der Dosierung des Futters (5) direkt auf die Futterkette (4) dosiert.

In einer anderen Ausführungsform des Verfahrens wird der Calcium-basierte Futterzusatz (1) mittels einer Dosiervorrichtung (3, 3*) zum Futter (5) dosiert, wobei die Zugabe des Futterzusatzes (1) nach dem Zwischenbehälter (6) für das Futter (5) in die Futter-Förderleitung (7) erfolgt, in welcher das Futter (5) direkt zur Futterkette (4) gefördert wird. Dabei vermischt sich der Futterzusatz (1) mit dem Futter (5) schon in der Futter-Förderleitung (7). Bei Beendigung der Dosierung des Futterzusatzes (1) und des Futters (5) wird bevorzugt die Zufuhr derselben schon vor der Futter-Förderleitung (7) gestoppt, wodurch restliches Futter (5) vermischt mit Futterzusatz (1) auf die Futterkette (4) gelangt. Somit wird die ganze dosierte Menge Futterzusatz (1) auf die Futterkette (4) gefördert, wodurch bei der nächsten Fütterung keine früheren Futtermischungen mehr vorhanden sind.

Die Dosiervorrichtung (3) umfasst im erfindungsgemässen Verfahrens einen Vorratsbehälter (31) für den Calcium-basierten Futterzusatz (1) mit einer ersten, oberen Öffnung (311) und einer zweiten, unteren Öffnung (312), sowie
- ein Rührelement (32),
- einen Auslassschieber (33),
- ein Förderelement (34),
und gegebenenfalls mindestens ein Führungselement (35).

In der im erfindungsgemässen Verfahren eingesetzten Dosiervorrichtung (3) ist bevorzugt
- das Rührelement (32) im Bereich der zweiten Öffnung (312) des Vorratsbehälters (31) angeordnet, um während dem Betrieb des Rührelements (32) und während der Dosierung des Futterzusatzes (1) ein Zusammenbacken des Futterzusatzes (1) zu verhindern,
- der Auslassschieber (33) im Bereich der zweiten Öffnung (312) angeordnet, um die Grösse der Öffnung (312) zu regulieren, wodurch die pro Zeiteinheit optimal zu dosierende Menge an Futterzusatz (1) eingestellt werden kann, welche während der Dosierung des Futterzusatzes (1) durch die zweite Öffnung (312) gelangt, und/oder
- das Förderelement (34) unterhalb und/oder seitlich der zweiten Öffnung (312) angeordnet, dass der Futterzusatz (1) während dessen Dosierung vom Vorratsbehälter (31) durch die zweite Öffnung (312), gegebenenfalls über ein Führungselement (35), auf das Förderelement (34) und, gegebenenfalls über ein weiteres Führungselement (35), weiter auf die Futterkette (4) gelangt, wobei das Förderelement (34) bevorzugt ein Förderband, ein

Rüttler, eine Vibrationsrille und/oder eine Förderkette darstellt. Der Calcium-basierte Futterzusatz (1) wird im erfindungsgemässen Verfahren bevorzugt durch die erste Öffnung (311) - beispielsweise von Hand oder automatisiert über eine Förderleitung - in den Vorratsbehälter (31) der Dosiervorrichtung (3, 3*) eingebracht, gelangt durch die zweite Öffnung (312), gegebenenfalls über ein Führungselement (35), beispielsweise in Form einer Rinne, auf das Förderelement (34) und, gegebenenfalls über ein weiteres Führungselement (35), beispielsweise in Form einer Rinne oder eines Rohrs, weiter auf die Futterkette (4), von welcher das Geflügel den Futterzusatz (1) - zusammen mit dem Futter (5) - aufnehmen kann.

Der körnige Calcium-basierte Futterzusatz (1) ist im Wesentlichen, d.h. zu mindestens 90 Gew.-%, insbesondere zu mindestens 95 Gew.-%, ein anorganischer Futterzusatz (1) und
- umfasst bevorzugt Kalk, Muschelkalk, Kalkgrit und/oder Quarzgrit, d.h. Futterkalk, und/oder,
- weist zu mindestens 80 Gew.-%, insbesondere zu mindestens 90 Gew.-%, einen Durchmesser von 0.5 mm bis 6 mm, insbesondere von 2 bis 4 mm, gemessen nach DIN 4022, auf. Unter Durchmesser wird typischerweise der Siebdurchmesser verstanden. Dabei wird die Körnung am besten dem Alter der Tiere angepasst, wobei die Körnung für Jungtiere bevorzugt bis zwei, bei ausgewachsenen Tieren bis sechs Millimeter betragen kann. Bei Legehennen weist der Kalk bevorzugt einen Durchmesser von etwa zwei bis vier Millimeter auf.

Die Dosierung des Calcium-basierten Futterzusatzes (1) erfolgt beim erfindungsgemässen Verfahren - wenn der Futterzusatz (1) dosiert wird - bevorzugt zeitgleich mit der Dosierung des Futters (5), wobei die Dosierungen des Calcium-basierten Futterzusatzes (1) und des Futters (5) bevorzugt elektronisch oder mechanisch miteinander abgestimmt sind.

Die Dosierung des Calcium-basierten Futterzusatzes (1) erfolgt vorteilhafterweise kontinuierlich und bevorzugt gleichmässig, um eine gleichmässige Verteilung des Futterzusatzes (1) auf der Futterkette (4) - und somit eine gleichmässige Vermischung mit dem Futter (5) - zu ermöglichen. Dabei wird unter kontinuierlich verstanden, dass während mindestens 5 Sekunden, insbesondere während mindestens 10 Sekunden, der Futterzusatz (1) gleichmässig auf die Futterkette (4) gefördert wird. Unter gleichmässig wird verstanden, dass die geförderte Menge an Futterzusatz (1) regelmässig, gleichbleibend, und somit linear - und nicht stossweise - auf die Förderkette (4) gefördert wird.

Die Dosiermenge des Calcium-basierten Futterzusatzes (1) beträgt während der Zugabe des Futterzusatzes (1) typischerweise
- pro Futterkette (4) und pro Minute 10 bis 3000 Gramm, bevorzugt 100 bis 1500 Gramm, insbesondere 300 bis 700 Gramm, wobei die Dosiervorrichtung (3, 3*) den Futterzusatz (1) mit einem Futterzusatzverteiler (8) auch auf mehr als eine Futterkette (4) verteilen kann. Ist dies der Fall, erhöht sich die Dosiermenge je Dosiervorrichtung (3, 3*) dementsprechend, und/oder
- 0.1 bis 20 Gew.-% Futterzusatz (1), bezogen auf die tägliche Gesamtmenge des Futters (5) und des Futterzusatzes (1), beträgt.

Der optionale Futterzusatzverteiler (8), auch Schüttgutverteiler oder Mengenteiler genannt, verteilt den Futterzusatz (1) auf verschiedene Leitungen, welche den Futterzusatz (1) auf die jeweiligen Futterketten (4) befördert. Der Futterzusatzverteiler (8) kann ein Zweiwege- oder Mehrwege-Mengenteiler sein und kann pneumatisch, mechanisch oder mittels Gravitation betrieben werden. Geeignete Futterzusatzverteiler (8) sind im Fachhandel erhältlich und dem Fachmann bekannt.

Die Dosiermenge des Futters (5) beträgt - während der Dosierung des Futterzusatzes (1) - typischerweise pro Minute 0.1 bis 50 kg, bevorzugt 1 bis 30 kg, insbesondere 5 bis 20 kg, wobei der Futterzusatz (1) jeweils höchstens 20% der gesamten täglichen dosierten Futtermenge, d.h. des Futters (5) und des Futterzusatzes (1), beträgt.

Die Dosiermenge des Calcium-basierten Futterzusatzes (1) vom Vorratsbehälter (31) auf die Futterkette (4) kann überraschenderweise einfach mittels
- Verstellen des Auslassschiebers (33) zur Einstellung der Grösse der zweiten Öffnung (312), und/oder
- Verstellen der Fördergeschwindigkeit des Förderelements (34) eingestellt werden.

Dadurch kann auch die Dosierung des Futterzusatzes (1) auf einfache Art und Weise gestoppt werden, indem der Auslassschieber (33) ganz geschlossen wird und/oder das Förderelement (34) gestoppt wird.

### Die Futterkalk-Dosiervorrichtunq (3*)

Die Futterkalk-Dosiervorrichtung (3*), d.h. Dosiervorrichtung (3*), ist speziell geeignet für die kontinuierliche Dosierung eines körnigen Calcium-basierten Futterzusatzes (1) mit einem Durchmesser bis 6 mm, gemessen nach DIN 4022, auf Futterketten (4) für Geflügel, insbesondere Legehennen. Dabei weist der Futterzusatz (1) bevorzugt zu mindestens 80 Gew.-%, insbesondere zu mindestens 90 Gew.-%, einen Durchmesser von 0.5 mm bis 6 mm, insbesondere von 2 bis 4 mm, gemessen nach DIN 4022, auf. Somit wird die Dosiervorrichtung (3*) bevorzugt im erfindungsgemässen Verfahren zur Dosierung des Futterzusatzes (1) in Ställen (2) für Geflügel, insbesondere Legehennen eingesetzt. Der zu dosierende Futterzusatz (1) ist aufgrund der Körnigkeit und der Materialbeschaffenheit in aller Regel schwer förder- und dosierbar und weist aufgrund der kantigen bis scharfkantigen Morphologie der einzelnen Körner einen Schüttwinkel von mindestens 40°, bevorzugt mindestens 43°, gemessen nach DIN/ISO 4324, auf.

Die Futterkalk-Dosiervorrichtung (3*) eignet sich besonders für eine Dosiermenge des Futterzusatzes (1) pro Futterkette (4) von 10 bis 3000 Gramm, bevorzugt von 100 bis 1500 Gramm, insbesondere von 300 bis 700 Gramm, pro Minute. Wird der Futterzusatz (1) von einer Dosiervorrichtung (3*) mittels Futterzusatzverteiler (8) auf mehrere Futterketten (4) verteilt, erhöht sich die Dosiermenge je Dosiervorrichtung (3*) entsprechend der Anzahl Futterketten (4).

Die Futterkalk-Dosiervorrichtung (3*) umfasst einen Vorratsbehälter (31) für den Calcium-basierten Futterzusatz (1) mit einer ersten, oberen Öffnung (311) und einer zweiten, unteren Öffnung (312), sowie ein Rührelement (32), ein Förderelement (34) und einen Auslassschieber (33), wobei
- das Rührelement (32) im Bereich der zweiten Öffnung (312) innerhalb des Vorratsbehälters (31) angeordnet ist, um während dem Betrieb des Rührelements (32) und während der Dosierung des Calcium-basierten Futterzusatzes (1) ein Zusammenbacken des Calcium-basierten Futterzusatzes (1) zu verhindern,
- mit dem Auslassschieber (33) die Grösse der zweiten Öffnung (312) eingestellt werden kann, um die Menge an Calcium-basiertem Futterzusatz (1) einzustellen, welche während der Dosierung des Calcium-basierten Futterzusatzes (1) durch die zweite Öffnung (312) gelangt, wobei die einstellbare Dosiermenge des Calcium-basierten Futterzusatzes (1) pro Futterkette (4) und pro Minute bevorzugt 10 bis 3000 Gramm beträgt, und
- das Förderelement (34) unterhalb und/oder seitlich der zweiten Öffnung (312) so angeordnet ist, dass der Calcium-basierte Futterzusatz (1) während dessen Dosierung vom Vorratsbehälter (31) durch die zweite Öffnung (312), gegebenenfalls über ein Führungselement (35), auf das Förderelement (34) und, gegebenenfalls über ein weiteres Führungselement (35), weiter auf die Futterkette (4) gelangt, wobei das Förderelement (34) ein Förderband, ein Rüttler, eine Vibrationsrille und/oder eine Förderkette darstellt.

Der Vorratsbehälter (31) der Dosiervorrichtung (3*) weist bevorzugt ein Volumen von 1 dm³ bis 5 m³, bevorzugt von 5 dm³ bis 0.5 m³, insbesondere von 10 dm³ bis 50 dm³, auf. Dabei wird der Vorratsbehälter (31) typischerweise von Hand oder mittels Förderleitung über die erste Öffnung (311) mit dem Futterzusatz (1) gefüllt.

Der Vorratsbehälter (31) der Dosiervorrichtung (3*) ist vorteilhafterweise oberhalb des Förderelements (34) angebracht. Zudem ist er bevorzugt fest an der Dosiervorrichtung (3*) fixiert, d.h. er lässt sich nicht unabhängig von der Dosiervorrichtung (3*) bewegen.

Die erste, obere Öffnung (311) ist im oberen Bereich des Vorratsbehälters (31) der Dosiervorrichtung (3*) angebracht und dient zur Befüllung des Vorratsbehälters (31) mit dem Futterzusatz (1). Somit bildet die Öffnung (311) zumindest einen Teil des in vertikaler Richtung obersten Bereichs des Vorratsbehälters (31) und/oder einen seitlichen Bereich im oberen Bereich des Vorratsbehälters (31).

Die zweite, untere Öffnung (312) ist im unteren Bereich des Vorratsbehälters (31) der Dosiervorrichtung (3*) angebracht und dient zur Entleerung des Vorratsbehälters (31) während der Entnahme des Futterzusatzes (1). Somit bildet die Öffnung (312) zumindest einen Teil des in vertikaler Richtung angeordneten untersten Bereich des Vorratsbehälters (31) und/oder einen seitlichen Bereich des unteren Bereichs. Bildet die Öffnung (312) einen untersten, seitlichen Teil des Vorratsbehälters (31), kann beispielsweise der unterste horizontale Bereich durch einen Teil des Vorratsbehälters (31) oder durch einen Teil des Förderelements (34), auf welches der Futterzusatz (1) gelangt, abgedeckt sein.

Die zweite Öffnung (312) des Vorratsbehälters (31) der Dosiervorrichtung (3*) weist bevorzugt eine Breite von bis zu 5 cm, insbesondere von 1 bis 3 cm, und eine Höhe von - beispielsweise mit dem Auslassschieber (33) eingestellt - bis zu 5 cm, insbesondere von 0.5 bis 3 cm, auf.

Das Rührelement (32) der Dosiervorrichtung (3*) ist im Bereich der zweiten Öffnung (312) und innerhalb des Vorratsbehälters (31) angeordnet. Das Rührelement (32) rührt, d.h. bewegt, den Futterzusatz (1) während der Futterzusatzes (1) dosiert wird. Dadurch wird verhindert, dass sich der Futterzusatz im Bereich der Öffnung (312) zusammenbackt. Somit kann der Futterzusatz (1) während der ganzen Dosierung ohne Zusammenbacken und ohne Stoppen kontinuierlich dosiert werden. Das Rührelement (32) ist vom Förderelement (34) verschieden.

Bevorzugte, nicht-limitierende Rührelemente (32) der Dosiervorrichtung (3*) umfassen ein Pendelbolzen, Schraubenrührer, Schaufelrührer, Propellerrührer, Impellerrührer, Exzenterrührer, Taumelscheibenrührer und/oder Spiralrührer, wobei Pendelbolzen und/oder Taumelscheibenrührer ganz besonders bevorzugt sind. Dabei ist das Rührelement (32) bevorzugt mit dem Antrieb des Förderelements (34) verbunden.

Mit dem Auslassschieber (33) der Dosiervorrichtung (3*) kann die Grösse der unteren, zweiten Öffnung (312) eingestellt werden, um die Menge an Futterzusatz (1) einzustellen, welche während der Dosierung des Futterzusatzes (1) durch die Öffnung (312) auf die Futterkette (4) gelangt.

Der Auslassschieber (33) wird bevorzugt mittels Drehgelenk gedreht oder in Führungen geführt, um die Grösse der zweiten Öffnung (312) einzustellen. Dabei wird die Position des Auslassschiebers (33) bevorzugt mit einer Einstellvorrichtung (331) eingestellt und fixiert.

Geeignete Einstellvorrichtungen (331) sind dem Fachmann bekannt. Beispielsweise kann eine Schraube sowohl am Vorratsbehälter (31) als auch am Auslassschieber (33) befestigt werden, wobei der Auslassschieber (33) durch Drehen der Schraube relativ zum Vorratsbehälter reversibel verschiebbar ist.

Das Förderelement (34) der Dosiervorrichtung (3*) ist von der Futterkette (4) verschieden und ist unterhalb der zweiten Öffnung (312) ― und somit unterhalb des Vorratsbehälters (31) ― so angeordnet, dass der Futterzusatz (1) während dessen Dosierung vom Vorratsbehälter (31) durch die zweite Öffnung (312), gegebenenfalls über ein Führungselement (35), auf das Förderelement (34) gelangt. Dabei ist oft bevorzugt, dass das Förderelement (34) direkt unterhalb der Öffnung (312) angeordnet ist, sodass der Futterzusatz (1) direkt vom Vorratsbehälter (31) auf das Förderelement (34) gelangt.

Der Abstand der zweiten Öffnung (312) zum darunter angeordneten Förderelement (34) bestimmt die Menge des Futterzusatzes (1) mit, die aus dem Vorratsbehälter (1) gefördert wird. Dabei erfolgt der Austrag des Futterzusatzes (1) nur wenn sich das Förderelement (34) bewegt. Der Fachmann kann den optimalen Abstand einstellen.

Das Förderelement (34) der Dosiervorrichtung (3*) fördert typischerweise den Futterzusatz (1) linear und in der Regel nur über kurze Strecken, d.h. typischerweise nicht mehr als 2 Meter, insbesondere nicht mehr als 1 Meter, ganz besonders bevorzugt nicht mehr als 0.5 Meter. Der geförderte Futterzusatz (1) gelangt anschliessend vom Förderelement (34) direkt oder über ein Führungselement (35) auf die Förderkette (4).

Durch Einstellen der Geschwindigkeit des Förderelements (34), beispielsweise in Form eines Förderbands, kann auch die Menge an dosiertem Futterzusatz (1) pro Zeiteinheit eingestellt werden. Diese Einstellung kann alternativ oder zusätzlich zur Einstellung der Grösse der zweiten Öffnung (312) erfolgen.

Es ist erfindungswesentlich, dass das Förderelement (34) der Futterkalk-Dosiervorrichtung (3*) ein Förderband, ein Rüttler, eine Vibrationsrille und/oder eine Förderkette darstellt. Denn dadurch kann der schwer förderbare, körnige Calcium-basierte Futterzusatz (1) kontinuierlich und gleichmässig gefördert werden. Dadurch gelangt der Futterzusatz (1) linear, d.h. regelmässig und kontinuierlich und zu gleichen Mengen, auf die Futterkette (4). Um diesen Effekt noch zu optimieren, ist es äusserst hilfreich, wenn der Futterzusatz (1) relativ langsam, d.h. mit einer Fördergeschwindigkeit von 0.1 bis 12 m/min; insbesondere von 0.2 bis 5 m/min, gefördert wird. Der Fachmann weiss diese Fördergeschwindigkeiten einzustellen, beispielsweise mittels Regelung der Antriebgeschwindigkeit von Förderband resp. Förderkette oder mittels Frequenz des Rüttlers resp. der Vibrationsrille und/oder deren Neigung.

Ist das Förderelement (34) der Dosiervorrichtung (3*) ein Förderband, ist in einer bevorzugten Ausführungsform die untere, zweite Öffnung (312) im untersten seitlichen Bereich des Vorratsbehälters (31) angeordnet und ein Teil des oberen Bereichs des Förderbandes bildet den unteren Abschluss des Vorratsbehälters (31).

In einer bevorzugten Ausführungsform weist die Dosiervorrichtung (3*) mindestens ein Führungselement (35) auf. Das Führungselement (35) führt den Futterzusatz (1) typischerweise mittels Gravitation von einem Bereich zu einem anderen Bereich. Somit ist das Führungselement (35) bevorzugt zwischen der unteren, zweiten Öffnung (312) und einem - in diesem Fall typischerweise seitlich unten angeordneten - Förderelemente (34). Alternativ - oder zusätzlich - ist ein Führungselement (35) nach dem Förderelement (34) angeordnet, um den Futterzusatz (1) vom Förderelement (34) verlustfrei auf die Futterkette (4) zu führen. Geeignete Führungselemente (35) sind beispielsweise in Form von Rinnen oder Rohren.

### Die Verwendung

Das erfindungsgemässe Verfahren und die Futterkalk-Dosiervorrichtung (3*) werden erfindungsgemäss zum Dosieren von Calcium-basierten Futterzusätzen (1) in Ställen (2) - beispielsweise Freilaufställe - für Geflügel wie Legehennen verwendet. Dabei können die Calcium-basierten Futterzusätze (1) unabhängig von der Dosierung des Futters (5) direkt auf die Futterkette (4) und/oder nach dem Zwischenbehälter (6) für das Futter (5) in die Futter-Förderleitung (7), in welcher das Futter (5) direkt zur Futterkette (4) gefördert wird, dosiert werden. Dadurch kann dem Geflügel auf der Futterkette (4) abwechselnd Futter (5) mit und ohne Calcium-basiertem Futterzusatz (1) verabreicht werden. Als Futterzusatz (1) eignen sich insbesondere schwer förder- und dosierbare Futterzusätze (1) mit einer kantigen bis scharfkantigen Morphologie der einzelnen Körner, welche einen Schüttwinkel von mindestens 40°, bevorzugt mindestens 43°, gemessen nach DIN/ISO 4324, aufweisen. Ein besonders geeigneter Calcium-basierter Futterzusatz (1) ist Kalk wie Muschelkalk, Kalkgrit und/oder Quarzgrit.

### Verwendete Bezugszeichen:

- (1): Calcium-basierter Futterzusatz
- (2): Stall für Geflügel wie Legehennen
- (3): Im Verfahren eingesetzte Dosiervorrichtung
- (3*): Futterkalk-Dosiervorrichtung
- (31): Vorratsbehälter
- (311): erste, obere Öffnung des Vorratsbehälters (31) für Zugabe des Futterzusatzes (1)
- (312): zweite, untere Öffnung des Vorratsbehälters (31) für die Entnahme des Futterzusatzes (1)
- (32): Rührelement
- (33): Auslassschieber
- (331): Einstellvorrichtung für den Auslassschieber (33)
- (34): Förderelement
- (35): Führungselement
- (4): Futterkette
- (5): Futter
- (6): Zwischenbehälter für das Futter (5)
- (7): Futter-Förderleitung zwischen Zwischenbehälter (6) und Futterkette (4)
- (8): Futterzusatzverteiler

Im Folgenden werden nicht-limitierende, bevorzugte Ausführungsformen des erfindungsgemässen Verfahrens und der Futterkalk-Dosiervorrichtung (3*) anhand der nachfolgenden Zeichnungen beschrieben. Diese sind nicht einschränkend auszulegen und werden als Bestandteil der Beschreibung verstanden:

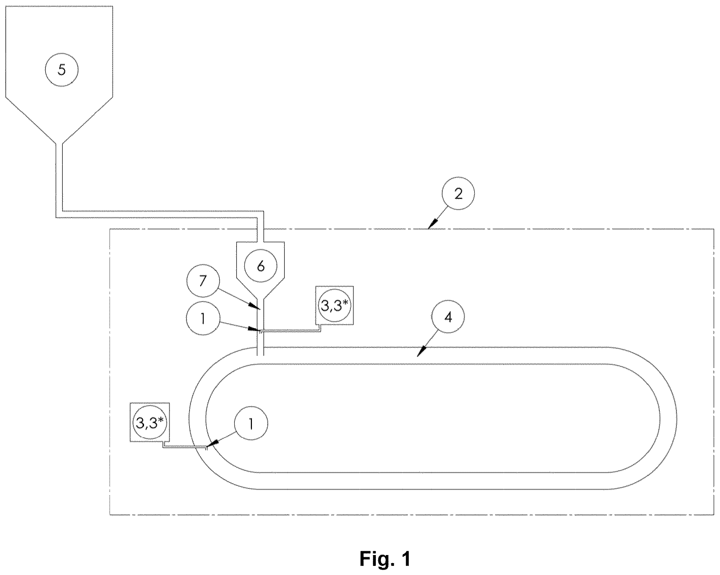

- Fig. 1: zeigt beispiel- und schemenhaft das erfindungsgemässe Verfahren in einem Stall (2), beispielsweise ein Freilaufstall, für Geflügel wie Legehennen. Zur Fütterung wird Futter (5) von einem Aussensilo über eine Förderleitung in ein Zwischenbehälter (6) transportiert. Von dort erfolgt - gegebenenfalls über eine Futter-Förderleitung (7) - die Feindosierung des Futters (5) auf die Futterkette (4). Anhand dieser wird das Futter (5) durch den Stall (2) transportiert, damit alle Tiere einen möglichst optimalen Zugang zum Futter (5) haben. Während das Futter (5) bei jeder Fütterung auf die Futterkette (4) dosiert wird, wird erfindungsgemäss der Futterzusatz (1), welcher in der Regel nur während einer Fütterung am Tag als Ergänzung zum Futter (5) den Tieren gefüttert wird, über die Dosier-vorrichtung (3, 3*) entweder direkt auf die Futterkette (4), und/oder nach dem Zwischenbehälter (6) in die Futter-Förderleitung (7) dosiert. Dadurch gelangt der ganze Futterzusatz (1) während der Dosierung ― und somit auch während der einen Fütterung ― auf die Futterkette (4) und es gibt bei späteren Fütterungen keine Vermischung des Futterzusatzes (1) mit dem Futter (5).

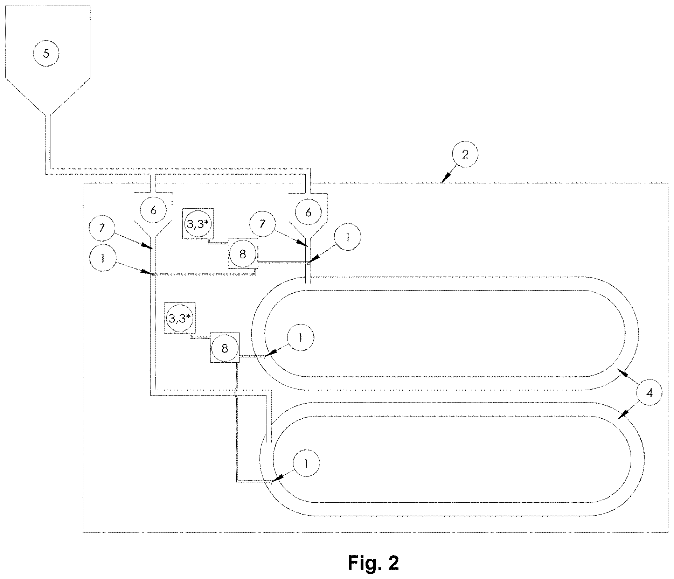

- Fig. 2: zeigt beispiel- und schemenhaft analog Fig. 1 das erfindungs-gemässe Verfahren mit einem Futterzusatzverteiler (8). Dieser ist zwischen der Dosiervorrichtung (3, 3*) und der Futterkette (4) respektive zwischen der Dosiervorrichtung (3, 3*) und der Futter-Förderleitung (7) angeordnet und ermöglicht das gleichzeitige Dosieren des Futterzusatzes (1) mit einer Dosiervorrichtung (3, 3*) auf mehrere Futterketten (4).

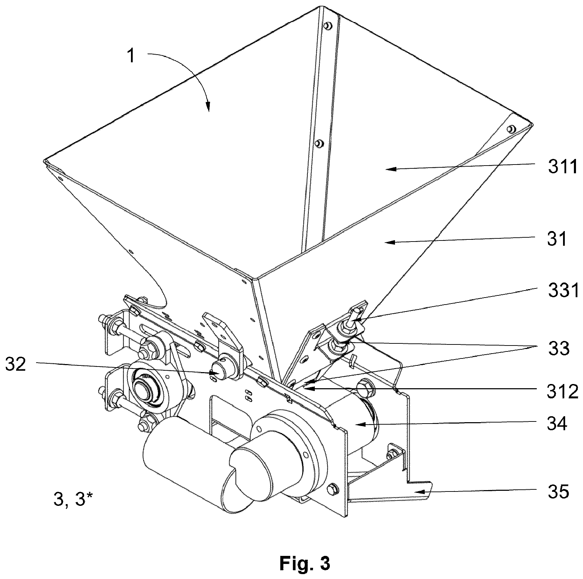

- Fig. 3: zeigt beispielhaft eine Futterkalk-Dosiervorrichtung (3*) zur Dosierung eines Futterzusatzes (1) in Ställen (2) für Geflügel, insbesondere Legehennen. Im oberen Bereich der Dosier-vorrichtung (3*) ist der Vorratsbehälter (31) in Form eines Trichters mit rechteckigem Grundriss angeordnet. Zuoberst - und somit mit dem grössten horizontalen Grundriss - befindet sich die erste, obere Öffnung (311), in welche der Futterzusatz (1) eingefüllt wird. Im unteren Bereich des Vorratsbehälters (31) ist der Auslass-schieber (33) angeordnet, welcher mit der Einstellvorrichtung (331) fixiert werden kann. Der Auslassschieber (33) ist beispielhaft mit einer Abdeckplatte überdeckt und wird seitlich mittels Führungen geführt. Im untersten Bereich des Vorratsbehälters (31) befindet sich die zweite, untere Öffnung (312), in deren Bereich das Rührelement (32) angeordnet ist. Das Rührelement (32) selbst ist nicht sichtbar, sondern lediglich die Lagerung des Rührelements (32). Der Futterzusatz (1) wird vom Vorratsbehälter (31) durch die untere Öffnung (312) ausgetragen und gelangt auf das Förderelement (34) in Form eines Förderbandes. Von dort gelangt der Futterzusatz (1) bei laufendem Förderband beispielhaft auf das optionale Führungselement (35) und weiter direkt - oder beispielsweise über ein Rohr - auf die Futterkette (4) (nicht dargestellt). Das Förderband wird durch zwei Rollen gehalten. Während die Rolle über dem Führungselement (35) auf der rechten Seite der Darstellung festmontiert ist, kann die Rolle auf der linken Seite seitlich verschoben werden, um das Förderband zu spannen. Zwischen den beiden Rollen ist schemenhaft ein Elektromotor angezeigt, welcher das Förderband antreibt.

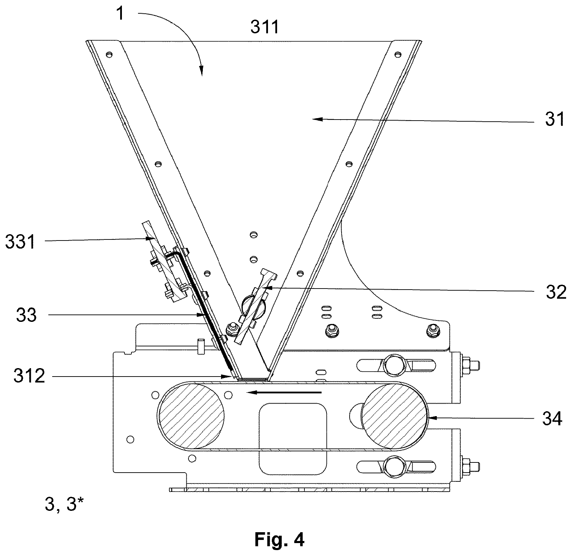

- Fig. 4: zeigt beispielhaft einen Querschnitt der Futterkalk-Dosier-vorrichtung (3*) mit Vorratsbehälter (31) und erster, oberer Öffnung (311), durch welche der Futterzusatz (1) eingeführt wird. Im unteren Bereich des Vorratsbehälter (31) ist das Rührelement (32) beispielhaft in Form eines Pendelbolzens angeordnet. Ebenfalls im unteren Bereich des Vorratsbehälters (31), jedoch ausserhalb desselben, ist der verstellbare Auslassschieber (33) angeordnet, welcher mit der Einstellvorrichtung (331) eingestellt und fixiert werden kann. Mit dem Auslassschieber (33) - hier schwarz eingezeichnet - lässt sich die Grösse der zweiten, unteren Öffnung (312) regulieren. Der Vorratsbehälter (31) ist oberhalb des Förderelements (34) in Form eines Förderbandes angeordnet. Dabei zeigt die Pfeil-richtung die Laufrichtung des Förderbands. Ein Teil des oberen Bereichs des Förderbands dient in dieser Ausführungsform als unterste Abdeckung des Vorratsbehälters (31). Somit kommt zwar Futterzusatz (1) in Kontakt mit dem Förderband, der Futterzusatz (1) kann jedoch nur über die untere Öffnung (312) entfernt werden. Dadurch wird die Austragmenge an Futterzusatz (1) einerseits durch die Grösse der Öffnung (312) und andererseits durch die Geschwindigkeit des Förderelements (34) bestimmt.

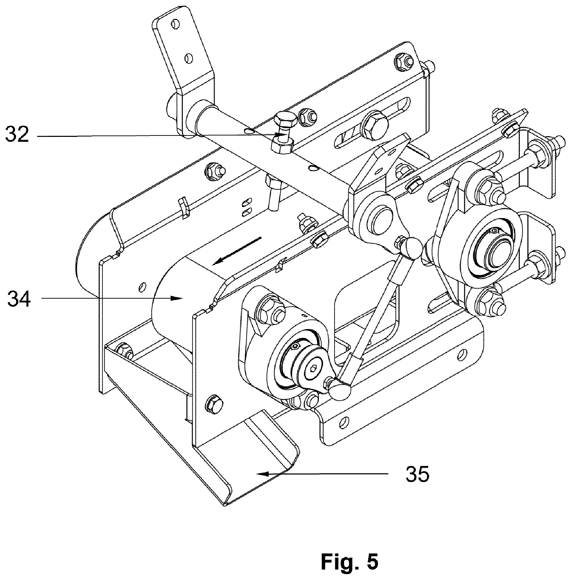

- Fig. 5: zeigt beispielhaft die Futterkalk-Dosiervorrichtung (3*) ohne den Vorratsbehälter (31). Dabei wird das eingebaute Rührelement (32) in Form eines Pendelbolzens sichtbar. Das Rührelement (32) ist mit dem Antrieb des Förderelements (34) mittels einer Pleuel-stange verbunden. Dadurch wird das Förderelement (34) in Form eines Fliessbands und das Rührwerk, d.h. das Rührelement (32), gleichzeitig angetrieben. Gelangt der Futterzusatz (1) - durch das Rührelement (32) gelockert - durch die untere Öffnung (312) (nicht dargestellt) auf das Förderband, wird der Futterzusatz (1) in Laufrichtung des Förderbands (mit Pfeil dargestellt) nach links transportiert, wo es auf das Führungselement (35) fällt und von dort direkt oder über ein weiteres Transportelement - beispielsweise ein Rohr - auf die Futterkette (4) (nicht dargestellt).

## Patentansprüche

1. Verfahren zur Dosierung eines körnigen Calcium-basierten Futterzusatzes (1) in Ställen (2) für Geflügel, insbesondere Legehennen, wobei Futter (5) von einem Silo, gegebenenfalls über einen Zwischenbehälter (6), über eine Futter-Förderleitung (7) auf eine Futterkette (4) gefördert wird, **dadurch gekennzeichnet, dass** der Calcium-basierte Futterzusatz (1) mittels einer Dosiervorrichtung (3)
- unabhängig von der Dosierung des Futters (5) direkt auf die Futterkette (4) dosiert wird, und/oder
- zum Futter (5) dosiert wird, wobei die Zugabe des Calcium-basierten Futterzusatzes (1) nach dem Zwischenbehälter (6) für das Futter (5) in die Futter-Förderleitung (7) erfolgt, in welcher das Futter (5) direkt zur Futterkette (4) gefördert wird, wodurch dem Geflügel auf der Futterkette (4) abwechselnd Futter (5) mit und ohne Calcium-basiertem Futterzusatz (1) verabreicht wird, wobei die Dosiervorrichtung (3) einen Vorratsbehälter (31) für den Calcium-basierten Futterzusatz (1) mit einer ersten, oberen Öffnung (311) und einer zweiten, unteren Öffnung (312) umfasst, sowie
- ein Rührelement (32),
- einen Auslassschieber (33),
- ein Förderelement (34),
und gegebenenfalls mindestens ein Führungselement (35).

2. Verfahren nach Anspruch 1, **dadurch gekennzeichnet, dass** der Calcium-basierte Futterzusatz (1) durch die erste Öffnung (311) in den Vorratsbehälter (31) der Dosiervorrichtung (3) eingebracht, durch die zweite Öffnung (312), gegebenenfalls über ein Führungselement (35), auf das Förderelement (34) und, gegebenenfalls über ein weiteres Führungselement (35), weiter auf die Futterkette (4) gelangt.

3. Verfahren nach mindestens einem der Ansprüche 1 bis 2, **dadurch gekennzeichnet, dass** der körnige Calcium-basierte Futterzusatz (1) im Wesentlichen ein anorganischer Futterzusatz (1) ist und
- Kalk, Muschelkalk, Kalkgrit und/oder Quarzgrit umfasst, und/oder
- zu mindestens 80 Gew.-%, insbesondere zu mindestens 90 Gew.-%, einen Durchmesser von 0.5 mm bis 6 mm, insbesondere von 2 bis 4 mm, gemessen nach DIN 4022, aufweist.

4. Verfahren nach mindestens einem der Ansprüche 1 bis 3, **dadurch gekennzeichnet, dass** die Dosierung des Calcium-basierten Futterzusatzes (1) zeitgleich mit der Dosierung des Futters (5) erfolgt, wobei die Dosierungen des Calcium-basierten Futterzusatzes (1) und des Futters (5) bevorzugt elektronisch oder mechanisch miteinander abgestimmt sind.

5. Verfahren nach mindestens einem der Ansprüche 1 bis 4, **dadurch gekennzeichnet, dass** die Dosierung des Calcium-basierten Futterzusatzes (1) während der Dosierung kontinuierlich und bevorzugt gleichmässig erfolgt.

6. Verfahren nach mindestens einem der Ansprüche 1 bis 5, **dadurch gekennzeichnet, dass** die Dosiermenge des Calcium-basierten Futterzusatzes (1)
- pro Futterkette (4) und pro Minute 10 bis 3000 Gramm, bevorzugt 100 bis 1500 Gramm, insbesondere 300 bis 700 Gramm, beträgt, wobei die Dosiervorrichtung (3) den Calcium-basierten Futterzusatz (1) mit einem Futterzusatzverteiler (8) auch auf mehr als eine Futterkette (4) verteilen kann, und/oder
- 0.1 bis 20 Gew.-% Futterzusatz (1), bezogen auf die tägliche Gesamtmenge des Futters (5) und des Futterzusatzes (1), beträgt.

7. Verfahren nach mindestens einem der Ansprüche 1 bis 6, **dadurch gekennzeichnet, dass** die Dosiermenge des Calcium-basierten Futterzusatzes (1) vom Vorratsbehälter (31) auf die Futterkette (4) eingestellt wird mittels
- Verstellen des Auslassschiebers (33) zur Einstellung der Grösse der zweiten Öffnung (312), und/oder
- Verstellen der Fördergeschwindigkeit des Förderelements (34).

8. Verfahren nach mindestens einem der Ansprüche 1 bis 7, **dadurch gekennzeichnet, dass** die Dosiervorrichtung (3) eine Futterkalk-Dosiervorrichtung (3*) ist für die kontinuierliche Dosierung eines körnigen Calcium-basierten Futterzusatzes (1) mit einem Durchmesser bis 6 mm, gemessen nach DIN 4022, auf Futterketten (4) für Geflügel, insbesondere Legehennen, umfassend einen Vorratsbehälter (31) für den Calcium-basierten Futterzusatz (1) mit einer ersten, oberen Öffnung (311) und einer zweiten, unteren Öffnung (312), sowie ein Rührelement (32), ein Förderelement (34) und einen Auslassschieber (33), wobei
- das Rührelement (32) im Bereich der zweiten Öffnung (312) innerhalb des Vorratsbehälters (31) angeordnet ist, um während dem Betrieb des Rührelements (32) und während der Dosierung des Calcium-basierten Futterzusatzes (1) ein Zusammenbacken des Calcium-basierten Futterzusatzes (1) zu verhindern,
- mit dem Auslassschieber (33) die Grösse der zweiten Öffnung (312) eingestellt wird, um die Menge an Calcium-basiertem Futterzusatz (1) einzustellen, welche während der Dosierung des Calcium-basierten Futterzusatzes (1) durch die zweite Öffnung (312) gelangt, wobei die einstellbare Dosiermenge des Calcium-basierten Futterzusatzes (1) pro Futterkette (4) und pro Minute bevorzugt 10 bis 3000 Gramm beträgt, und
- das Förderelement (34) unterhalb und/oder seitlich der zweiten Öffnung (312) so angeordnet ist, dass der Calcium-basierte Futterzusatz (1) während dessen Dosierung vom Vorratsbehälter (31) durch die zweite Öffnung (312), gegebenenfalls über ein Führungselement (35), auf das Förderelement (34) und, gegebenenfalls über ein weiteres Führungselement (35), weiter auf die Futterkette (4) gelangt, wobei das Förderelement (34) ein Förderband, ein Rüttler, eine Vibrationsrille und/oder eine Förderkette darstellt.

9. Verfahren nach Anspruch 8, **dadurch gekennzeichnet, dass** der Vorratsbehälter (31) ein Volumen von 1 dm³ bis 5 m³, bevorzugt von 5 dm³ bis 0.5 m³, insbesondere von 10 dm³ bis 50 dm³, aufweist.

10. Verfahren nach Anspruch 8 oder 9, **dadurch gekennzeichnet, dass** die zweite Öffnung (312) des Vorratsbehälters (31) eine Breite von bis zu 5 cm, insbesondere von 1 bis 3 cm, und eine Höhe von bis zu 5 cm, insbesondere von 0.5 bis 3 cm, aufweist.

11. Verfahren nach mindestens einem der Ansprüche 8 bis 10, **dadurch gekennzeichnet, dass** das Rührelement (32) ein Pendelbolzen, Schraubenrührer, Schaufelrührer, Propellerrührer, Impellerrührer, Exzenterrührer, Taumelscheibenrührer und/oder Spiralrührer, insbesondere ein Pendelbolzen und/oder Taumelscheibenrührer, ist, wobei das Rührelement (32) bevorzugt mit dem Antrieb des Förderelements (34) verbunden ist.

12. Verfahren nach mindestens einem der Ansprüche 8 bis 11, **dadurch gekennzeichnet, dass** der Auslassschieber (33) mittels Drehgelenk gedreht oder in Führungen geführt wird, um die Grösse der zweiten Öffnung (312) einzustellen, wobei die Position des Auslassschiebers (33) bevorzugt mit einer Einstellvorrichtung (331) eingestellt und fixiert wird.

## Claims

1. A method for metering a granular calcium-based feed additive (1) in stalls (2) for poultry, particularly laying hens, feed (5) being conveyed from a silo, optionally via an intermediate container (6), via a feed conveying line (7) to a feed chain (4), **characterized in that** the calcium-based feed additive (1) by means of a metering device (3)
- is metered directly onto the feed chain (4) regardless of the metering of the feed (5), and/or
- is metered to the feed (5), wherein the calcium-based feed additive (1) is added after the intermediate container (6) for the feed (5) into the feed conveying line (7), in which the feed (5) is conveyed directly to the feed chain (4),
whereby the poultry on the feed chain (4) are alternately administered feed (5) with and without calcium-based feed additive (1), wherein the metering device (3) comprises a storage container (31) for the calcium-based feed additive (1) having a first, upper opening (311) and a second, lower opening (312), and
- a stirring element (32),
- an outlet valve (33),
- a conveying element (34),
and optionally at least one guide element (35).

2. The method according to claim 1, **characterized in that** the calcium-based feed additive (1) is introduced into the storage container (31) of the metering device (3) through the first opening (311), passing through the second opening (312), optionally via a guide element (35) on the conveying element (34) and, optionally via a further guide element (35), further onto the feed chain (4).

3. The method according to at least one of claims 1 to 2, **characterized in that** the granular calcium-based feed additive (1) is essentially an inorganic feed additive (1) and
- comprises lime, shell limestone, lime grit and/or quartz grit, and/or
- at least 80% by weight, particularly at least 90% by weight, has a diameter of 0.5 mm to 6 mm, particularly 2 to 4 mm, measured in accordance with DIN 4022.

4. The method according to at least one of claims 1 to 3, **characterized in that** the calcium-based feed additive (1) is metered at the same time as the metering of the feed (5), wherein the meterings of the calcium-based feed additive (1) and the feed (5) are preferably matched to one another electronically or mechanically.

5. The method according to at least one of claims 1 to 4, **characterized in that** the calcium-based feed additive (1) is metered continuously and preferably uniformly during the metering.

6. The method according to at least one of claims 1 to 5, **characterized in that** the metering amount of the calcium-based feed additive (1)
- per feed chain (4) and per minute is 10 to 3000 grams, preferably 100 to 1500 grams, particularly 300 to 700 grams, wherein the metering device (3) can distribute the calcium-based feed additive (1) to more than one feed chain (4) using a feed additive distributor (8), and/or
- is 0.1 to 20% by weight feed additive (1), based on the total daily amount of the feed (5) and the feed additive (1).

7. The method according to at least one of claims 1 to 6, **characterized in that** the metering amount of the calcium-based feed additive (1) from the storage container (31) to the feed chain (4) is set by means of
- shifting the outlet slide (33) to adjust the size of the second opening (312), and/or
- shifting the conveying speed of the conveying element (34).

8. The method according to at least one of claims 1 to 7, **characterized in that** the metering device (3) is a feed lime metering device (3*) for the continuous metering of a granular calcium-based feed additive (1) having a diameter of up to 6 mm, measured according to DIN 4022, on feed chains (4) for poultry, particularly laying hens, comprising a storage container (31) for the calcium-based feed additive (1) having a first, upper opening (311) and a second, lower opening (312), and a stirring element (32), a conveying element (34) and an outlet slide (33), wherein
- the stirring element (32) is arranged in the region of the second opening (312) within the storage container (31) in order to prevent the calcium-based feed additive (1) from caking during operation of the stirring element (32) and during the metering of the calcium-based feed additive (1),
- the size of the second opening (312) is set using the outlet slide (33) in order to set the amount of calcium-based feed additive (1) which is passed through the second opening (312) during the metering of the calcium-based feed additive (1), wherein the adjustable metering of the calcium-based feed additive (1) per feed chain (4) and per minute is preferably 10 to 3000 grams, and
- the conveying element (34) is arranged below and/or to the side of the second opening (312) such that the calcium-based feed (1) additive, while being metered, passes from the storage container (31) through the second opening (312), optionally via a guide element (35), onto the conveying element (34) and, optionally via a further guide element (35), further onto the feed chain (4), wherein the conveying element (34) is a conveyor belt, a vibrating unit, a vibration groove and/or constitutes a conveyor chain.

9. The method according to claim 8, **characterized in that** the storage container (31) has a volume of 1 dm³ to 5 m³, preferably 5 dm³ to 0.5 m³, particularly 10 dm³ to 50 dm³.

10. The method according to claim 8 or 9, **characterized in that** the second opening (312) of the storage container (31) has a width of up to 5 cm, particularly from 1 to 3 cm, and a height of up to 5 cm, particularly from 0.5 to 3 cm.

11. The method according to at least one of claims 8 to 10, **characterized in that** the stirring element (32) is a pendulum bolt, screw stirrer, paddle stirrer, propeller stirrer, impeller stirrer, eccentric stirrer, swash plate stirrer and/or spiral stirrer, particularly a pendulum bolt and/or swash plate stirrer, wherein the stirring element (32) is preferably connected to the drive of the conveying element (34).

12. The method according to at least one of claims 8 to 11, **characterized in that** the outlet slide (33) is rotated by means of a swivel joint or guided in guides in order to adjust the size of the second opening (312), wherein the position of the outlet slide (33) is preferably adjusted and fixed using an adjusting device (331).

## Revendications

1. Procédé, destiné à doser un complément alimentaire (1) granulaire à base de calcium, dans des bâtiments avicoles (2) pour des volailles, notamment des poules pondeuses, du fourrage (5) étant convoyé à partir d'un silo, le cas échéant par l'intermédiaire d'un réservoir intermédiaire (6), par l'intermédiaire d'un conduit de convoyage du fourrage (7) dans une chaîne d'alimentation animale (4), **caractérisé en ce qu'**au moyen d'un dispositif doseur (3), le complément alimentaire (1) à base de calcium
- est dosé indépendamment du dosage du fourrage (5) directement dans la chaîne d'alimentation animale (4), et/ou
- est dosé en addition au fourrage (5), l'ajout du complément alimentaire (1) à base de calcium s'effectuant en aval du réservoir intermédiaire (6) pour le fourrage (5) dans le conduit de convoyage fourrage (7) dans lequel le fourrage (5) est convoyé directement vers la chaîne d'alimentation animale (4),
suite à quoi, il est administré à la volaille dans la chaîne d'alimentation animale (4), en alternance du fourrage (5) supplémenté et non en complément alimentaire (1) à base de calcium, le dispositif doseur (3) comprenant un réservoir de stockage (31) pour le complément alimentaire (1) à base de calcium, pourvu d'une première ouverture (311) supérieure et d'une deuxième ouverture (312) inférieure, et
- d'un élément agitateur (32),
- d'un coulisseau de sortie (33),
- d'un élément convoyeur (34),
et le cas échéant, d'au moins un élément de guidage (35) .

2. Procédé selon la revendication 1, **caractérisé en ce que** le complément alimentaire (1) à base de calcium est introduit à travers la première ouverture (311) dans le réservoir de stockage (31) du dispositif doseur (3), arrive à travers la deuxième ouverture (312), le cas échéant par l'intermédiaire d'un élément de guidage (35) sur l'élément convoyeur (34) et le cas échéant, par l'intermédiaire d'un élément de guidage (35) supplémentaire, par la suite dans la chaîne d'alimentation animale (4).

3. Procédé selon au moins l'une quelconque des revendications 1 à 2, **caractérisé en ce que** le complément alimentaire (1) granulaire à base de calcium est essentiellement un complément alimentaire (1) inorganique, et comporte
- du calcaire, du calcaire coquillier, du grit calcaire et/ou du grit quartzeux et/ou
- présente à raison d'au moins 80 % en poids, notamment à raison d'au moins 90 % en poids un diamètre de 0.5 mm à 6 mm, notamment de 2 à 4 mm, mesuré selon la norme DIN 4022.

4. Procédé selon au moins l'une quelconque des revendications 1 à 3, **caractérisé en ce que** le dosage du complément alimentaire (1) à base de calcium s'effectue simultanément au dosage du fourrage (5), les dosages du complément alimentaire (1) à base de calcium et du fourrage (5) étant synchronisés l'un avec l'autre de préférence par moyen électronique ou mécanique.

5. Procédé selon au moins l'une quelconque des revendications 1 à 4, **caractérisé en ce que** le dosage du complément alimentaire (1) à base de calcium pendant le dosage s'effectue en continu et de préférence de manière uniforme.

6. Procédé selon au moins l'une quelconque des revendications 1 à 5, **caractérisé en ce que** la quantité dosée du complément alimentaire (1) à base de calcium
- s'élève à de 10 à 3000 grammes, de préférence à de 100 à 1500 grammes, notamment à de 300 à 700 grammes par chaîne d'alimentation animale (4) et par minute, le dispositif doseur (3) étant susceptible de distribuer le complément alimentaire (1) à base de calcium à l'aide d'un distributeur (8) de complément alimentaire dans plus d'une chaîne d'alimentation animale (4), et/ou
- s'élève à de 0.1 à 20 % en poids de complément alimentaire (1), rapportés à la quantité totale journalière du fourrage (5) et du complément alimentaire (1).

7. Procédé selon au moins l'une quelconque des revendications 1 à 6, **caractérisé en ce que** la quantité dosée du complément alimentaire (1) à base de calcium à partir du réservoir de stockage (31) dans la chaîne d'alimentation animale (4) est réglée par
- ajustage du coulisseau de sortie (33) pour le réglage de la grandeur de la deuxième ouverture (312), et/ou
- ajustage de la vitesse de convoyage de l'élément convoyeur (34).

8. Procédé selon au moins l'une quelconque des revendications 1 à 7, **caractérisé en ce que** le dispositif doseur (3) est un dispositif doseur (3*) de calcaire alimentaire pour le dosage continu d'un complément alimentaire (1) à base de calcium d'un diamètre de jusqu'à 6 mm, mesuré selon la norme DIN 4022, dans des chaînes d'alimentation animale (4) pour des volailles, notamment des poules pondeuses, comprenant un réservoir de stockage (31) pour le complément alimentaire (1) à base de calcium, pourvu d'une première ouverture (311) supérieure et d'une deuxième ouverture (312) inférieure, ains que d'un élément agitateur (32), d'un élément convoyeur (34) et d'un coulisseau de sortie (33),
- l'élément agitateur (32) étant placé dans la zone de la deuxième ouverture (312) à l'intérieur du réservoir de stockage (31), pour empêcher pendant le fonctionnement de l'élément agitateur (32) et pendant le dosage du complément alimentaire (1) à base de calcium une agglomération du complément alimentaire (1) à base de calcium,
- à l'aide du coulisseau de sortie (33) étant réglée la grandeur de la deuxième ouverture (312), pour le réglage de la quantité de complément alimentaire (1) à base de calcium, qui pendant le dosage du complément alimentaire (1) à base de calcium arrive à travers la deuxième ouverture (312), la quantité dosée réglée du complément alimentaire (1) à base de calcium s'élevant de préférence à de 10 à 3000 grammes par chaîne d'alimentation animale (4) et par minute, et
- l'élément convoyeur (34) étant placé en-dessous et/ou latéralement de la deuxième ouverture (312), de telle sorte que pendant son dosage à partir du réservoir de stockage (31) à travers la deuxième ouverture (312), le complément alimentaire (1) à base de calcium arrive le cas échéant par l'intermédiaire d'un élément de guidage (35) sur l'élément convoyeur (34) et le cas échéant par l'intermédiaire d'un élément de guidage (35) supplémentaire, par la suite dans la chaîne d'alimentation animale (4), l'élément convoyeur (34) se présentant sous la forme d'une bande de convoyage, d'un vibreur, d'un sillon vibratoire et/ou d'une chaîne de convoyage.

9. Procédé selon la revendication 8, **caractérisé en ce que** le réservoir de stockage (31) présente un volume de 1 dm³ à 5 m³, de préférence de 5 dm³ à 0.5 m³, notamment de 10 dm³ à 50 dm³.

10. Procédé selon la revendication 8 ou 9, **caractérisé en ce que** la deuxième ouverture (312) du réservoir de stockage (31) présente une largeur de jusqu'à 5 cm, notamment de 1 à 3 cm, et une hauteur de jusqu'à 5 cm, notamment de 0.5 à 3 cm.

11. Procédé selon au moins l'une quelconque des revendications 8 à 10, **caractérisé en ce que** l'élément agitateur (32) est un axe pendulaire, un agitateur à vis, un agitateur à palettes, un agitateur à hélice, un agitateur rapide, un agitateur excentrique, un agitateur à disque en nutation et/ou un agitateur hélicoïdal, notamment un axe pendulaire et/ou un agitateur à disque en nutation, l'élément agitateur (32) étant relié de préférence avec l'entraînement de l'élément convoyeur (34).

12. Procédé selon au moins l'une quelconque des revendications 8 à 11, **caractérisé en ce que** l'on fait tourner le coulisseau de sortie (33) au moyen d'une articulation rotative ou on le guide dans des guidages, pour régler la grandeur de la deuxième ouverture (312), la position du coulisseau de sortie (33) étant réglée et fixée de préférence avec un dispositif de réglage (331).
